# FASCICULE DE BREVET EUROPEEN

(11) **EP 3 679 499 B1**
(45) Date de publication et mention de la délivrance du brevet: **04.09.2024**
(21) Numéro de dépôt: 18739889.6
(22) Date de dépôt: 19.07.2018
(51) Int. Cl.: H04L 9/40, G06F 21/30, H04W 12/06, H04W 84/18

(54) **ENRÔLEMENT PERFECTIONNÉ D'UN ÉQUIPEMENT DANS UN RÉSEAU SÉCURISÉ**
PERFEKTIONIERTE ANMELDUNG EINES GERÄTS IN EINEM SICHEREN NETZWERK
PERFECTIONED ENROLLMENT OF A DEVICE IN A SECURE NETWORK

(30) Priorité: 07.09.2017 FR 1758271
(43) Date de publication de la demande: 15.07.2020
(73) Titulaire: Electricité de France, 75008 Paris (FR); Enedis, 92079 Paris La Defense Cedex (FR)
(72) Inventeur: LAJOIE-MAZENC, Paul, 91300 Massy (FR); MICHON, Alexandre, 91300 Massy (FR); DELIS, Gautier, 91120 Palaiseau (FR); CARDOLACCIA, Florent, 92600 Asnieres sur Seine (FR)
(74) Mandataire: Plasseraud IP
(86) Numéro de dépôt international: PCT/EP2018/069692
(87) Numéro de publication internationale: WO 2019/048119

(56) Documents cités:
- WO-A1-2016/020950
- US-A1- 2007 022 469
- US-A1- 2014 181 521
- US-A1- 2016 226 837
- US-A1- 2016 270 020

## Description

La présente invention concerne la sécurité des échanges entre entités informatiques, et plus particulièrement l'enrôlement d'un équipement de type IED pour « Intelligent Electronic Device » dans un réseau sécurisé relié à un système d'information (« SI ») typiquement d'une entreprise.

Un tel équipement IED peut être un dispositif informatique intervenant par exemple dans un poste de transformation électrique du transporteur, d'un distributeur ou d'un client (consommateur ou producteur). Plus généralement, il peut s'agir d'un équipement quelconque tel qu'un compteur de fluide dit « intelligent », ou encore un terminal utilisateur (ou TU), un téléphone professionnel de type Smartphone à usage industriel ou tertiaire, ou autres. Plus particulièrement ici, un équipement IED désigne un équipement industriel auquel est accordé un niveau de confiance limité. Typiquement, ce type d'équipement n'a pas les capacités intrinsèques nécessaires pour permettre un enrôlement avec le haut niveau de sécurité exigé par certains domaines professionnels.

De tels équipements requièrent un matériel cryptographique nécessaire pour se connecter au réseau sécurisé d'un système d'information d'une entreprise telle que par exemple une entreprise exploitant le réseau précité de distribution d'électricité. Plus généralement, on désigne ci-après par le vocable « Entreprise » toute entité utilisatrice à laquelle un nouvel équipement IED est destiné et doit être enrôlé pour pouvoir communiquer via son réseau sécurisé.

On peut prévoir alors de désigner une entité du réseau sécurisé, tel qu'un routeur ou plus particulièrement une passerelle sécurisée du réseau, pour gérer les échanges nécessaires à l'obtention par l'IED du matériel cryptographique lui permettant de se connecter au réseau sécurisé.

Plus généralement, pour communiquer de manière sécurisée (authenticité, intégrité, confidentialité) avec le système d'information centralisé SI, les IED peuvent passer par un tel équipement local (la passerelle sécurisée précitée), dédié à la sécurisation de ce lien critique. Cet équipement est un équipement hautement sécurisé de contrôle d'accès désigné sous le sigle « HSACD » (acronyme anglophone pour « Hightly Secured Control Access Device ») et peut donc être un équipement réseau permettant une protection périmétrique (pare-feu, tunnel chiffrant) près d'un composant d'un SI industriel, ou encore l'interconnexion sécurisée entre différents composants du SI industriel. En plus de ces mécanismes de sécurité périmétrique, le HSACD peut offrir des services de sécurité de « proximité » aux systèmes métiers qu'ils protègent, tels que la centralisation et la corrélation de fichiers de logs ou des services cryptographiques.

Néanmoins, pour ce faire, les communications entre les IED et le HSACD doivent également être sécurisées, éventuellement avec un niveau de sécurité inférieur. Les IED doivent donc posséder, eux-mêmes, du matériel cryptographique (clés, certificats) pour cette sécurité de communication avec le HSACD.

Toutefois, il se pose un premier problème relatif au fait qu'en sortie d'usine d'un fournisseur, les IED ne sont généralement pas jugés de haute confiance par l'Entreprise (en particulier dans l'hypothèse où les IED peuvent comporter un matériel cryptographique d'un autre domaine de confiance, par exemple celui du fournisseur). Ces IED ne peuvent donc communiquer avec aucun équipement de l'Entreprise. Il faut alors « enrôler » les IED avant qu'ils ne puissent communiquer avec le réseau de l'Entreprise, que ce soit avec le SI ou même avec le HSACD. En particulier, il convient préalablement à toute communication de délivrer aux IED un matériel cryptographique selon un processus contrôlé leur permettant de s'insérer dans le domaine de confiance de l'Entreprise, et sinon de limiter autant que possible la « pénétration » dans le domaine de confiance de l'Entreprise d'un IED non enrôlé.

Un autre problème consiste en ce que les IED peuvent ne pas avoir les ressources informatiques nécessaires pour générer des clés robustes. Le document US 2014/181521 divulgue un dispositif informatique utilisateur qui permet l'enrôlement d'un dispositif d'automatisation à un serveur, où le serveur envoie des clés cryptographiques au dispositif d'automatisation. Le document WO 2016/020950 divulgue l'enrôlement d'un appareil IoT ou M2M à un réseau par une entité d'installation autorisée. Le document US 2016/270020 divulgue approvisionnement sécurisé des appareils Wi-Fi, où la configuration et l'enrôlement d'un appareil à un serveur de approvisionnement est effectué par un utilisateur autorisé. Le document US 2007/022469 divulgue authentification des utilisateurs à l'aide de d'une identifiant unique pour une ligne de communication physique dédiée associée au bâtiment. Le document US 2016/226837 divulgue un serveur pour authentifier une puce intelligente connectée à un réseau par l'intermédiaire d'un terminal.

La présente invention vient améliorer cette situation.

Elle propose à cet effet un procédé d'enrôlement d'un équipement (IED) auprès d'un réseau sécurisé auquel est connecté un système d'information (SI), le procédé comportant les étapes mises en oeuvre par un équipement de confiance (HSACD), connecté au réseau sécurisé:
a) recevoir (S1, S22) d'un terminal utilisateur (J, TU), distinct de l'équipement à enrôler (IED), une autorisation de se connecter à l'équipement à enrôler (IED), ladite autorisation notifiant l'équipement de confiance (HSACD) que l'équipement à enrôler (IED) est autorisé à accéder au réseau sécurisé et activant un mode d'enrôlement de l'équipement de confiance (HSACD),
b) dans le mode d'enrôlement, générer (S3, S24), sur réception de l'autorisation de se connecter à l'équipement à enrôler (IED), des clés cryptographiques destinées à l'équipement à enrôler (IED) pour accéder au réseau sécurisé, et
c) transmettre (S5, S26) les clés cryptographiques à l'équipement à enrôler (IED), lesdites clés cryptographiques permettant l'accès sécurisé de l'équipement (IED) au réseau sécurisé.

Dans une réalisation, le procédé comporte une étape, préalable à la transmission des clés cryptographiques dans laquelle, après génération des clés cryptographiques, une certification des clés est requise auprès du système d'information.

Sur obtention de cette certification, les clés cryptographiques et un certificat associé sont transmis à l'équipement à enrôler.

Dans une réalisation, la requête en certification des clés est effectuée selon l'un au moins des protocoles CMP, SCEP, CMS.

Dans une forme de réalisation, l'autorisation de connexion émise à l'étape a) est conditionnée par la fourniture d'un identifiant valide par l'utilisateur du terminal.

Par exemple, dans un mode de réalisation, l'identifiant est un code d'identification personnelle, saisi par l'utilisateur sur une interface homme machine du terminal.

Dans une forme de réalisation, une invitation à saisir le code d'identification est déclenchée sur le terminal par coopération du terminal avec un jeton cryptographique à disposition de l'utilisateur.

Dans une réalisation, le jeton cryptographique est une clé USB à processeur, comportant un organe de connexion mâle agencé pour s'interconnecter avec un organe de connexion femelle, homologue, que comporte le terminal utilisateur, l'interconnexion des organes provoquant l'exécution d'une routine sur le terminal utilisateur invitant l'utilisateur à saisir son code d'identification personnelle.

Dans une forme de réalisation, l'équipement de confiance est un équipement hautement sécurisé de contrôle d'accès du réseau.

La présente invention vise un programme informatique caractérisé en ce qu'il comporte des instructions pour la mise en oeuvre du procédé, lorsque ce programme est exécuté par un processeur.

La présente invention vise aussi un équipement de confiance comportant un circuit de traitement pour la mise en oeuvre du procédé.

La présente invention vise en outre un terminal utilisateur comportant un circuit de traitement pour la mise en oeuvre du procédé.

Enfin, la présente invention vise un jeton cryptographique comportant un circuit de traitement pour la mise en oeuvre du procédé.

D'autres avantages et caractéristiques apparaitront à la lecture d'exemples de réalisation présentés dans la description détaillée ci-après, et à l'examen des dessins annexés sur lesquels :
- la figure 1 illustre schématiquement un système pour la mise en oeuvre de l'invention, dans un exemple de réalisation,
- la figure 2 illustre les échanges entre les différentes entités de ce système, dans un exemple de réalisation,
- la figure 3 illustre les principales étapes mises en oeuvre par l'équipement de confiance HSACD, dans un exemple de réalisation,
- la figure 4 illustre schématiquement la structure d'un tel équipement de confiance HSACD, dans un exemple de réalisation,
- la figure 5 illustre schématiquement la structure d'un jeton cryptographique J et celle d'un terminal TU à disposition d'un agent terrain AT, et pouvant coopérer avec le jeton J, dans un exemple de réalisation.

Ainsi, le procédé de l'invention propose d'appliquer un protocole permettant d'intégrer un IED dans le domaine de confiance de l'Entreprise en se reposant sur l'équipement sécurisé HSACD.

Avantageusement, cette solution permet :
- de faire générer les clés utilisées ultérieurement par l'IED par le HSACD, lorsque l'IED n'est pas en mesure de le faire,
- de contrôler physiquement l'intégrité de l'IED et du lien entre le HSACD et l'IED avant l'enrôlement, ce qui augmente le niveau de confiance dans le lien entre le HSACD et l'IED.

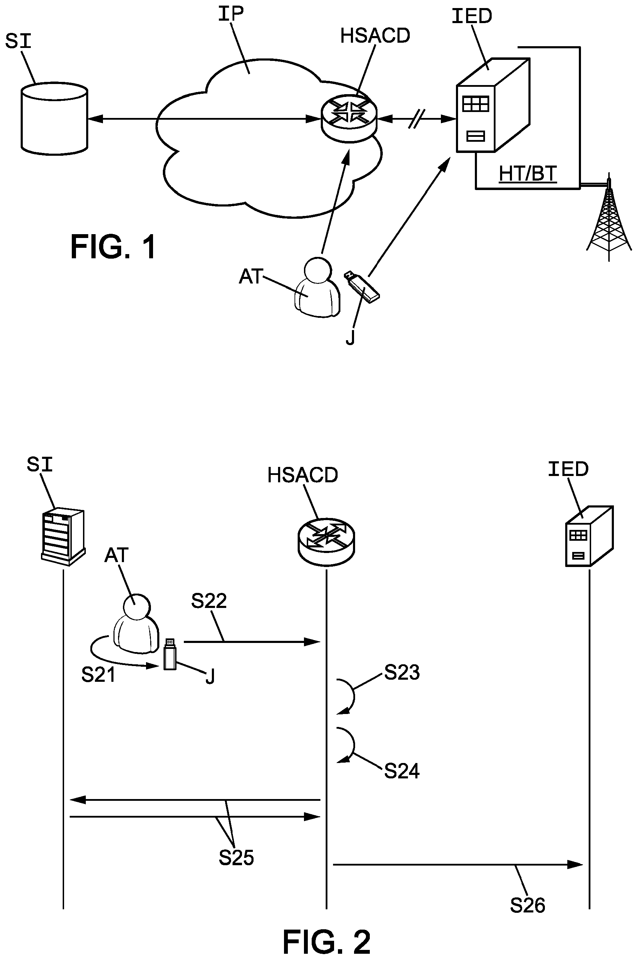

Cette solution propose, dans l'exemple de réalisation présenté ci-après, de mettre en oeuvre un système à quatre entités, tel qu'illustré sur la figure 1 :
- l'IED lui-même, qui n'est initialement pas dans le domaine de confiance de l'Entreprise et ne peut donc pas communiquer avec le HSACD ou le SI de l'Entreprise ;
- le HSACD, un équipement présent dans le domaine de confiance de l'Entreprise, relié à l'IED par un réseau IP ;
- un agent de terrain AT, qui configure le HSACD et l'IED, et qui s'assure de leur bon fonctionnement « métier » ;
- un jeton cryptographique J de l'agent, qui lui permet de prouver qu'il appartient au domaine de confiance de l'Entreprise DE, ce jeton cryptographique J fonctionnant par exemple en entrant un simple code PIN (pour « personnal identification number »), connu uniquement de l'agent AT.

En référence à la figure 2, le déroulement du protocole peut être le suivant dans un exemple de réalisation.

A l'étape S21, l'agent AT vérifie la conformité physique de la connexion HSACD - IED et de l'IED lui-même.

A l'étape S22, l'agent AT se connecte au HSACD grâce à son jeton cryptographique J et au PIN associé. Par exemple, l'agent AT peut avoir à sa disposition un terminal utilisateur (TU) tel qu'un ordinateur connecté (via le réseau IP typiquement) au dispositif HSACD et équipé d'une fiche femelle susceptible d'accueillir une clé USB. Le jeton cryptographique J peut alors se présenter sous la forme d'une fiche ou « dongle » USB, équipée d'un processeur apte à exécuter une routine prédéfinie lorsque le jeton se connecte au terminal TU de l'agent AT. En particulier, cette routine consiste :
- à demander à l'agent AT d'entrer un code PIN via une interface homme machine du TU,
- et si le code PIN entré est correct (par comparaison avec une référence de code PIN exact stockée en mémoire du dongle), à connecter le TU au réseau IP pour notifier au routeur HSACD qu'un équipement IED autorisé (puisque le code PIN entré est valide) cherche à se connecter au réseau protégé du SI (éventuellement avec une adresse IP que peut renseigner optionnellement l'agent AT).

Ainsi, à l'issue de cette étape S22 et grâce à l'action du jeton cryptographique, le HSACD accepte de passer en mode « enrôlement d'un IED » à l'étape S23. A l'étape suivante S24, le HSACD génère les clés de cryptage/décryptage pour l'IED pour accéder au réseau sécurisé du SI, et communiquer ainsi notamment avec le SI.

Préalablement de la communication de ces clés à l'IED, le HSACD fait certifier ces clés auprès du SI, via un protocole classique connu en soi, à l'étape S25.

Un exemple de protocole possible pour la mise en oeuvre de l'étape S25, peut être de type CMS (pour « Cryptographie Message Syntax »), ou CMP (pour « Certificate Management Protocol »), ou encore SCEP (pour « Simple Certificate Enrollment Protocol »), de l'IETF (« Internet Engineering Task Force »), ou autres.

Enfin, à l'étape S26, le HSACD transmet à l'IED les clés ainsi certifiées, c'est-à-dire les clés cryptographiques et le certificat associé, permettant ainsi sa connexion sécurisée au réseau protégé du SI. Cette communication à l'étape S26 peut s'effectuer via une interface classique (type webservice), éventuellement normalisée (telle que définie dans la norme IEC-61850 par exemple).

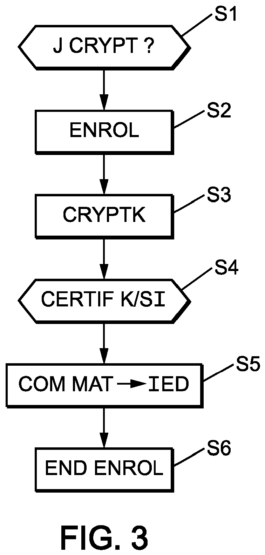

Les étapes mises en oeuvre par l'équipement hautement sécurisé de contrôle d'accès HSACD sont résumées sur la figure 3. Par exemple, à l'issue d'une première étape S1, si le HSACD reçoit une demande enrôlement d'un nouvel équipement IED, communiquée par le jeton cryptographique J, via le terminal TU de l'agent AT, le HSACD met en oeuvre une routine informatique d'enrôlement à l'étape S2. Cette routine informatique commence, à l'étape S3, par la génération de clés cryptographiques K. Ces clés, à l'étape S4, sont certifiées auprès du système d'information SI. Ensuite, à l'étape S5, la passerelle sécurisée HSACD transmet à l'IED ces clés certifiées (et plus généralement le matériel cryptographique MAT nécessaire à l'IED pour se connecter au réseau sécurisé). Une fois cette transmission à l'IED effectuée, le HSACD peut mettre fin à la procédure d'enrôlement à l'étape S6.

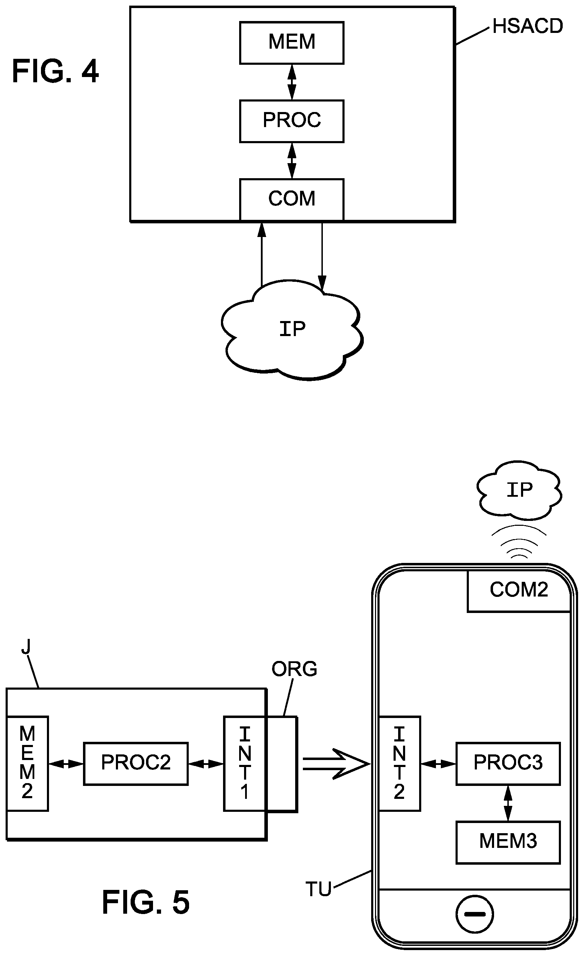

En référence maintenant à la figure 4, l'équipement HSACD comporte par exemple une interface de communication COM via le réseau IP, connectée à un processeur PROC pour exécuter tout ou partie des instructions du programme informatique selon l'invention, ces instructions étant par exemple stockées dans une mémoire MEM avec laquelle le processeur PROC peut coopérer. Ces instructions permettent typiquement d'exécuter le protocole d'enrôlement décrit ci-avant en référence à la figure 3.

En référence à la figure 5, le jeton cryptographique J peut se présenter sous la forme d'un dongle USB, comprenant une interface INT1 reliée à un organe de connexion mâle ORG d'une part, et à un processeur PROC2 d'autre part, ce processeur étant susceptible d'exécuter une partie des instructions du programme informatique selon l'invention, dans une réalisation particulière. Cette partie des instructions peut être stockée par exemple dans une mémoire MEM2 avec laquelle processeur PROC2 peut coopérer. Il s'agit typiquement des instructions lançant auprès du terminal de l'utilisateur TU l'interface homme machine pour saisir le code PIN de l'utilisateur, vérifiant ce code par rapport à la référence stockée en mémoire MEM2 du jeton J, et transmettant au terminal d'accueil TU l'ordre de se connecter à le HSACD pour exécuter la procédure d'enrôlement de l'IED.

Le terminal TU de l'utilisateur (ici, un terminal à disposition d'un agent de terrain AT) peut comporter quant à lui une interface INT2 reliée :
- à un organe de connexion femelle agencée pour accueillir l'organe ORG du jeton cryptographique J, et
- à un processeur PROC3 que comporte le terminal TU, et capable d'exécuter une partie des instructions du programme informatique selon l'invention, dans une réalisation particulière. Cette partie des instructions peut être stockée par exemple dans une mémoire MEM3 avec laquelle processeur PROC3 peut coopérer. Il s'agit typiquement des instructions permettant au terminal TU de coopérer avec le jeton J pour le lancement de l'interface homme machine et la saisie du code PIN, puis de se connecter au HSACD pour exécuter la procédure d'enrôlement de l'IED.

On relèvera toutefois que dans une alternative possible à celle illustrée sur la figure 5, le terminal TU peut stocker dans la mémoire MEM3 un module informatique de sécurité sous la forme d'une application par exemple qui, lorsqu'elle est exécutée, demande via une interface homme machine, de saisir un code PIN et, si le code est valide, communiquer avec le HSACD pour enclencher le protocole d'enrôlement de l'IED. En outre, alternativement à la saisie d'un code PIN, il peut être prévu la saisie d'une empreinte biométrique (empreinte digitale, ou d'iris) de l'utilisateur, laquelle est comparée à une référence stockée préalablement sur son terminal TU. Bien entendu, d'autres réalisations encore peuvent être prévues alternativement. Par exemple, le jeton J peut se présenter sous la forme d'une carte à processeur pouvant être lue sans contact en champ proche par le terminal TU.

La présente invention vient apporter de nombreux avantages par rapport aux solutions immédiates pour l'enrôlement d'un IED, par exemple en utilisant les protocoles connus CMP, SCEP ou CMS, utilisés dans le domaine de l'informatique tertiaire. Pour l'établissement initial de la confiance, ces protocoles peuvent utiliser plusieurs mécanismes :
- un certificat déjà établi dans l'IED ; ou
- un identifiant et un mot de passe uniques pour l'IED, lui permettant de s'authentifier auprès du SI.

Dans le cas du certificat préétabli, l'IED est déjà considéré comme enrôlé dans le domaine de confiance cible, ce qui suppose :
- que le fournisseur de l'IED dispose d'éléments permettant de dialoguer avec le domaine de confiance cible, ce qui en augmente les risques d'attaque ;
- ou que l'IED suit une étape de préparation, entre sa réception et son installation sur le terrain, ce qui est coûteux.

Le cas de l'identifiant et du mot de passe unique pour l'IED pose des problèmes similaires :
- l'identifiant et le mot de passe sont intégrés en usine par le fournisseur de l'IED ;
- ou alors l'identifiant et le mot de passe sont entrés par l'agent installant l'IED sur le terrain, mais il faut dans cette solution générer ces mots de passe de manière sécurisée, les transmettre à l'agent, etc. Cette gestion est complexe et cette solution est lente (l'agent de terrain découvre le mot de passe, le recopie sans faire de faute de frappe, etc.).

La solution présentée se passe de ces deux mécanismes grâce au HSACD, un équipement hautement sécurisé qui est déjà en mesure de communiquer avec le domaine de confiance, et permet de minimiser l'impact sur le fournisseur et sur l'agent de terrain effectuant l'installation de l'IED.

## Revendications

1. Procédé d'enrôlement d'un équipement (IED) auprès d'un réseau sécurisé auquel est connecté un système d'information (SI), le procédé comportant les étapes mises en oeuvre par un équipement de confiance (HSACD), connecté au réseau sécurisé :
a) recevoir (S1, S22) d'un terminal utilisateur (J, TU), distinct de l'équipement à enrôler (IED), une autorisation de se connecter à l'équipement à enrôler (IED), ladite autorisation notifiant l'équipement de confiance (HSACD) que l'équipement à enrôler (IED) est autorisé à accéder au réseau sécurisé et activant un mode d'enrôlement de l'équipement de confiance (HSACD),
b) dans le mode d'enrôlement, générer (S3, S24), sur réception de l'autorisation de se connecter à l'équipement à enrôler (IED), des clés cryptographiques destinées à l'équipement à enrôler (IED) pour accéder au réseau sécurisé, et
c) transmettre (S5, S26) les clés cryptographiques à l'équipement à enrôler (IED), lesdites clés cryptographiques permettant l'accès sécurisé de 1 équipement à enrôler (IED) au réseau sécurisé.

2. Procédé selon la revendication 1, comportant:
- après génération des clés cryptographiques, requérir (S4, S25) une certification desdites clés auprès du système d'information (SI),
- et sur obtention de ladite certification, transmettre les clés cryptographiques et un certificat associé à l'équipement à enrôler (IED).

3. Procédé selon la revendication 2, dans lequel la requête en certification des clés est effectuée selon l'un au moins des protocoles CMP, SCEP, CMS.

4. Procédé selon l'une des revendications précédentes, dans lequel l'autorisation de connexion émise à l'étape a) est conditionnée par la fourniture d'un identifiant valide par l'utilisateur du terminal (J, TU).

5. Procédé selon la revendication 4, dans lequel l'identifiant est un code d'identification personnelle, saisi par l'utilisateur sur une interface homme machine du terminal (J, TU).

6. Procédé selon la revendication 5, dans lequel une invitation à saisir le code d'identification est déclenchée sur le terminal par coopération du terminal avec un jeton cryptographique (J) à disposition de l'utilisateur (AT).

7. Procédé selon la revendication 6, dans lequel le jeton cryptographique (J) est une clé USB à processeur, comportant un organe de connexion mâle (ORG) agencé pour s'interconnecter avec un organe de connexion femelle, homologue, que comporte le terminal utilisateur (TU), l'interconnexion des organes provoquant l'exécution d'une routine sur le terminal utilisateur (TU) invitant l'utilisateur à saisir son code d'identification personnelle.

8. Procédé selon l'une des revendications précédentes, dans lequel l'équipement de confiance (HSACD) est un équipement hautement sécurisé de contrôle d'accès du réseau.

9. Programme informatique **caractérisé en ce qu'**il comporte des instructions pour la mise en oeuvre du procédé selon l'une des revendications 1 à 8, lorsque ce programme est exécuté par un processeur.

10. Equipement de confiance comportant un circuit de traitement pour la mise en oeuvre du procédé selon l'une des revendications 1 à 8.

11. Système comportant un terminal utilisateur comportant un circuit de traitement pour la mise en oeuvre du procédé selon la revendication 4 et un équipement de confiance (HSACD) comportant un circuit de traitement pour la mise en oeuvre du procédé selon l'une des revendications 1 à 8.

12. Système selon la revendication 11 comportant un jeton cryptographique comportant un circuit de traitement pour la mise en oeuvre du procédé selon l'une des revendications 6 et 7.

## Patentansprüche

1. Verfahren zum Anmelden einer Ausrüstung (IED) bei einem gesicherten Netzwerk, an das ein Informationssystem (SI) angeschlossen ist, wobei das Verfahren die folgenden Schritte umfasst, die von einer vertrauenswürdigen Ausrüstung (HSACD) durchgeführt werden, die an das gesicherte Netzwerk angeschlossen ist:
a) Empfangen (SI, S22) einer Autorisierung zur Verbindung mit der anzumeldenden Ausrüstung (IED) von einem Benutzerterminal (J, TU), das sich von der anzumeldenden Ausrüstung (IED) unterscheidet, wobei die Autorisierung die vertrauenswürdige Ausrüstung (HSACD) darüber informiert, dass die anzumeldende Ausrüstung (IED) autorisiert ist, auf das gesicherte Netzwerk zuzugreifen, und einen Anmeldemodus der vertrauenswürdigen Ausrüstung (HSACD) aktiviert,
b) im Anmeldemodus nach Erhalt der Autorisierung, sich mit dem anzumeldenden Gerät (IED) zu verbinden, Erzeugen (S3, S24) kryptografischer Schlüssel für die anzumeldende Ausrüstung (IED), um auf das gesicherte Netzwerk zuzugreifen, und
c) Übertragen (S5, S26) der kryptographischen Schlüssel an die anzumeldende Ausrüstung (IED), wobei die kryptographischen Schlüssel den sicheren Zugang der anzumeldenden Ausrüstung (IED) zum gesicherten Netzwerk ermöglichen.

2. Verfahren nach Anspruch 1, umfassend:
- nach der Erzeugung der kryptografischen Schlüssel, Anfordern (S4, S25) einer Zertifizierung dieser Schlüssel beim Informationssystem (SI),
- und nach Erhalt der Zertifizierung Übermitteln der kryptografischen Schlüssel und eines zugehörigen Zertifikates an die anzumeldende Ausrüstung (IED).

3. Verfahren nach Anspruch 2, wobei die Anforderung der Schlüsselzertifizierung gemäß wenigstens einem der Protokolle CMP, SCEP, CMS erfolgt.

4. Verfahren nach einem der vorhergehenden Ansprüche, wobei die in Schritt a) erteilte Verbindungsautorisierung von der Angabe einer gültigen Kennung durch den Terminalbenutzer abhängig gemacht wird (J, TU).

5. Verfahren nach Anspruch 4, wobei die Kennung ein persönlicher Identifikationscode ist, der vom Benutzer an einer Mensch-Maschine-Schnittstelle des Endgeräts (J, TU) eingegeben wird.

6. Verfahren nach Anspruch 5, wobei eine Aufforderung zur Eingabe des Identifikationscodes auf dem Endgerät durch Zusammenwirken des Endgeräts mit einem dem Nutzer (AT) zur Verfügung stehenden kryptographischen Token (J) ausgelöst wird.

7. Verfahren nach Anspruch 6, wobei der kryptographische Token (J) ein USB-Prozessor-Stick ist, der ein männliches Verbindungsorgan (ORG) aufweist, das dazu angeordnet ist, sich mit einem weiblichen, passenden Verbindungsorgan des Benutzerterminals (TU) zu verbinden, wobei die Verbindung der Organe die Ausführung einer Routine auf dem Benutzerterminal (TU) bewirkt, die den Benutzer zur Eingabe seines persönlichen Identifikationscodes auffordert.

8. Verfahren nach einem der vorhergehenden Ansprüche, wobei die vertrauenswürdige Ausrüstung (HSACD) eine hochsichere Ausrüstung zur Zugangskontrolle des Netzwerks ist.

9. Computerprogramm, **dadurch gekennzeichnet, dass** es Anweisungen für die Durchführung des Verfahrens nach einem der Ansprüche 1 bis 8 umfasst, wenn dieses Programm von einem Prozessor ausgeführt wird.

10. Vertrauenswürdige Ausrüstung, umfassend ein Verarbeitungsschaltung zur Durchführung des Verfahrens nach einem der Ansprüche 1 bis 8.

11. System, umfassend ein Benutzerendgerät, umfassend eine Verarbeitungsschaltung zur Durchführung des Verfahrens nach Anspruch 4 und eine vertrauenswürdige Ausrüstung (HSACD), umfassend eine Verarbeitungsschaltung zur Durchführung des Verfahrens nach einem der Ansprüche 1 bis 8.

12. System nach Anspruch 11, umfassend einen kryptographischen Token, umfassend eine Verarbeitungsschaltung zur Durchführung des Verfahrens nach einem der Ansprüche 6 und 7.

## Claims

1. Method for enrolling a device (IED) in a secure network to which an information system (IS) is connected, the method comprising the steps, implemented by a trusted device (HSACD) connected to the secure network, of:
a) receiving (S1, S22) from a user terminal (J, TU), distinct from the device to be enrolled (IED), an authorization to connect to the device to be enrolled (IED), said authorization notifying the trusted device (HSACD) that the device to be enrolled (IED) is authorized to access the secure network and activating an enrolment mode of the trusted device (HSACD),
b) in the enrolment mode, upon receiving the authorization to connect to the device to be enrolled (IED), generating (S3, S24) cryptographic keys intended for the device to be enrolled (IED) to access the secure network, and
c) transmitting (S5, S26) the cryptographic keys to the device to be enrolled (IED), said cryptographic keys enabling the secure access of the device to be enrolled (IED) to the secure network.

2. Method according to claim 1, comprising:
- after generation of the cryptographic keys, requesting (S4, S25) a certification of said keys with the information system (SI),
- and upon obtaining this certification, sending the cryptographic keys and an associated certificate to the device to be enrolled (IED).

3. Method according to claim 2, wherein the request for certification of the keys is carried out according to at least one among the CMP, SCEP, CMS protocols.

4. Method according to one of the preceding claims, wherein the connection authorization issued in step a) is conditional on the user of the terminal (J, TU) supplying a valid identifier.

5. Method according to claim 4, wherein the identifier is a personal identification code, entered by the user on a human-machine interface of the terminal (J, TU).

6. Method according to claim 5, wherein an invitation to enter the identification code is triggered on the terminal by collaboration of the terminal with a cryptographic token (J) available to the user (AT).

7. Method according to claim 6, wherein the cryptographic token (J) is a USB key with a processor, comprising a male connection member (ORG) arranged to interconnect with a counterpart female connection member comprised in the user terminal (TU), the interconnection of the members causing execution of a routine on the user terminal (TU) asking the user to enter his or her personal identification code.

8. Method according to one of the preceding claims, wherein the trusted device (HSACD) is a highly secure access control device of the network.

9. Computer program **characterized in that** it comprises instructions for implementing the method according to one of claims 1 to 8 when the program is executed by a processor.

10. Trusted device comprising a processing circuit for implementing the method according to one of claims 1 to 8.

11. System comprising a user terminal comprising a processing circuit for implementing the method according to claim 4 and a trusted device (HSACD) comprising a processing circuit for implementing the method according to one of claims 1 to 8.

12. System according to claim 11 further including a cryptographic token comprising a processing circuit for implementing the method according to one of claims 6 and 7.
